(19) Europäisches Patentamt
European Patent Office
Office européen des brevets

(11) **EP 3 788 328 B1**

(12) **EUROPEAN PATENT SPECIFICATION**

(45) Date of publication and mention
of the grant of the patent:
**16.03.2022 Bulletin 2022/11**

(21) Application number: **19723564.1**

(22) Date of filing: **29.04.2019**

(51) International Patent Classification (IPC):
**G01H 1/00** *(2006.01)*      **G01H 3/08** *(2006.01)*
**G01M 13/045** *(2019.01)*      **F03D 17/00** *(2016.01)*

(52) Cooperative Patent Classification (CPC):
**G01H 1/003; G01H 3/08; G01M 13/021;
G01M 13/028; G01M 13/045; G01N 29/14;
G01N 29/4445; G01N 29/4454; G01N 29/4472;
F03D 17/00; F05B 2270/334; G01N 2291/0258;
G01N 2291/2696**

(86) International application number:
**PCT/US2019/029579**

(87) International publication number:
**WO 2019/212936 (07.11.2019 Gazette 2019/45)**

(54) **SYSTEM AND PROCESS FOR PATTERN MATCHING BEARING VIBRATION DIAGNOSTICS**

SYSTEM UND VERFAHREN ZUR MUSTERANPASSUNG BEI DER
LAGERSCHWINGUNGSDIAGNOSE

SYSTÈME ET PROCÉDÉ DE DIAGNOSTIC DE VIBRATION DE PALIER PAR MISE EN
CORRESPONDANCE DE MOTIFS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.04.2018 US 201815966318**

(43) Date of publication of application:
**10.03.2021 Bulletin 2021/10**

(73) Proprietor: **General Electric Company
Schenectady, NY 12345 (US)**

(72) Inventors:
• **GHOSH, Subhankar**
  **New York 12309 (US)**
• **PAUL, Vipul**
  **New York 12309 (US)**
• **KANNEPALLI, Srinivas**
  **New York 12309 (US)**
• **KARNIK, Aditya**
  **New York 12309 (US)**
• **CANARY, Jeremy**
  **New York 12309 (US)**
• **POTTER, Joshua**
  **New York 12309 (US)**
• **MIHOK, John**
  **New York 12309 (US)**
• **DASARATHA, Sridhar**
  **New York 12309 (US)**

(74) Representative: **Zimmermann & Partner
Patentanwälte mbB
Postfach 330 920
80069 München (DE)**

(56) References cited:
**US-A1- 2011 060 564**

• **E. MENDEL ET AL: "Automatic bearing fault
pattern recognition using vibration signal
analysis", INDUSTRIAL ELECTRONICS, 2008.
ISIE 2008. IEEE INTERNATIONAL SYMPOSIUM
ON, 1 June 2008 (2008-06-01), pages 955-960,
XP055607132, Piscataway, NJ, USA DOI:
10.1109/ISIE.2008.4677026 ISBN:
978-1-4244-1665-3**

**(Cont. next page)**

- **ERIC BECHHOEFER ET AL: "Condition monitoring architecture: To reduce total cost of ownership", PROGNOSTICS AND HEALTH MANAGEMENT (PHM), 2012 IEEE CONFERENCE ON, IEEE, 18 June 2012 (2012-06-18), pages 1-9, XP032235511, DOI: 10.1109/ICPHM.2012.6299509 ISBN: 978-1-4673-0356-9**

**Description**

BACKGROUND

The field of the present disclosure relates, in general, to system monitoring and diagnostics. More particularly, the present disclosure relates to systems, devices and methods to detect and determine faults based on patterns in vibration spectra data.

The working condition of different components of an asset may be monitored by a Conditions Monitoring System (CMS), wherein alerts may be generated to indicate faults and other warnings regarding the operation of the asset. For some assets such as a wind turbine for example, a wind turbine Vibration analyst might monitor the health of the turbine's gearbox and other bearings using a CMS that uses bearing vibration data to detect anomalous spectrum spikes and, accordingly creates alerts based on the detected spectrum spikes. This conventional approach relies heavily on the availability and knowledge of the exact gearbox kinematic information for the wind turbine being monitored and is rule based, and uses limits or changes in trends to alert of possible component wear or damage.

In general, some conventional vibration monitoring and analysis systems usually consist of two steps where the first step is an automated alarming system that stores or has access to physical information such as natural fault frequency and rotational frequencies derived from kinematics information of the wind turbine, such as the count of gear teeth/rolling elements, etc. In a second step, a vibration analyst may review vibration spectrum plots associated with the wind turbine to understand whether the diagnosis from the alarming system is correct. This second step is necessitated since the alarm system usually only looks at absolute amplitude values or changes in trends at specific locations (i.e., frequencies) in the spectrum. By using precise kinematics information, a traditional CMS system may miss a known fault if a signature varies even slightly from a textbook (i.e., theoretical) signature. This is due to the rule based nature of the system that relies on spectrum spikes at specific frequencies to indicate known types of faults. While this approach might work for problems where the fault signature is well defined and well known, it tends to break down when a new (i.e., novel) fault emerges.

Patent document US 2011/0060564 discloses a method for classification of a sound generating process wherein vibration data are received from multiple assets, the characteristic vectors are determined for each asset from the corresponding vibration data, and the assets are grouped in clusters based on data similarity that is determined based on a statistical distribution of the characteristics. The clusters are classified as healthy or faulty based on the number of assets grouped in the clusters, according to the assumption that the likelihood that the number of healthy assets is larger than the number of assets which are faulty.

Accordingly, conventional systems may potentially miss novel faults and/or may not correctly detect known faults that have a signature that varies, even slightly, from standard fault frequencies or a signature that shifts away from the standard fault frequencies as the wear or damage progresses.

Therefore, there exists a need for methods and systems that support and facilitate a holistic view of a vibration spectrum for an asset, as opposed to specific amplitude values at specific frequencies in signal spectra.

BRIEF DESCRIPTION

One aspect of the invention refers to a method according to claim 1.

Another aspect of the invention refers to a system according to claim 12. Preferred embodiments are defined by the dependent claims.

DRAWINGS

These and other features, aspects, and advantages of the present disclosure will become better understood when the following detailed description is read with reference to the accompanying drawings in which like characters represent like parts throughout the drawings, wherein:

FIG. 1 is an illustrative schematic example of a wind turbine, including bearing mechanism therein;

FIG. 2 is an illustrative example signal spectrum including a Bearing Outer Race Fault, according to some embodiments herein;

FIG. 3 is an illustrative example signal spectrum including a Bearing Inner Race Fault, according to some embodiments herein;

FIG. 4 is an illustrative example signal spectrum including a Bearing Ball Spin Fault, according to some embodiments herein;

FIGS. 5A and 5B are plots related to a Planetary Ball Fault;

FIG. 6 is an illustrative example of a plot related to Ring Gear Fault, according to some embodiments herein;

FIG. 7 is an illustrative example block diagram of a system, according to some embodiments herein;

FIG. 8 is an illustrative example flow diagram of a process, according to some embodiments herein;

FIG. 9 is an illustrative example flow diagram of a fault detection and identification process, according to some embodiments herein;

FIG. 10 is an illustrative example flow diagram of a signal normalization process, according to some embodiments herein;

FIG. 11 is an illustrative example flow diagram of a signal clustering process, according to some embodiments herein;

FIG. 12 is an illustrative example flow diagram of a process to determine a Bearing Inner Race Fault for a High Speed Shaft, according to some embodiments herein;

FIG. 13 is an illustrative example flow diagram of a process to determine a Bearing Outer Race Fault for a High Speed Shaft, according to some embodiments herein;

FIG. 14 is an illustrative example flow diagram of a process to determine a Bearing Ball Spin Fault for a High Speed Shaft, according to some embodiments herein;

FIG. 15 is an illustrative example flow diagram of a fault diagnostics process for a Low Speed Shaft, according to some embodiments herein; and

FIG. 16 is an illustrative depiction of a block diagram of a system or device that can support an implementation of some processes disclosed herein.

Unless otherwise indicated, the drawings provided herein are meant to illustrate features of embodiments of this disclosure. These features are believed to be applicable in a wide variety of systems comprising one or more embodiments of this disclosure. As such, the drawings are not meant to include all conventional features known by those of ordinary skill in the art to be required for the practice of the embodiments disclosed herein.

DETAILED DESCRIPTION

In the following specification and the claims, a number of terms are referenced that have the following meanings.

The singular forms "a", "an", and "the" include plural references unless the context clearly dictates otherwise.

"Optional" or "optionally" means that the subsequently described event or circumstance may or may not occur, and that the description includes instances where the event occurs and instances where it does not.

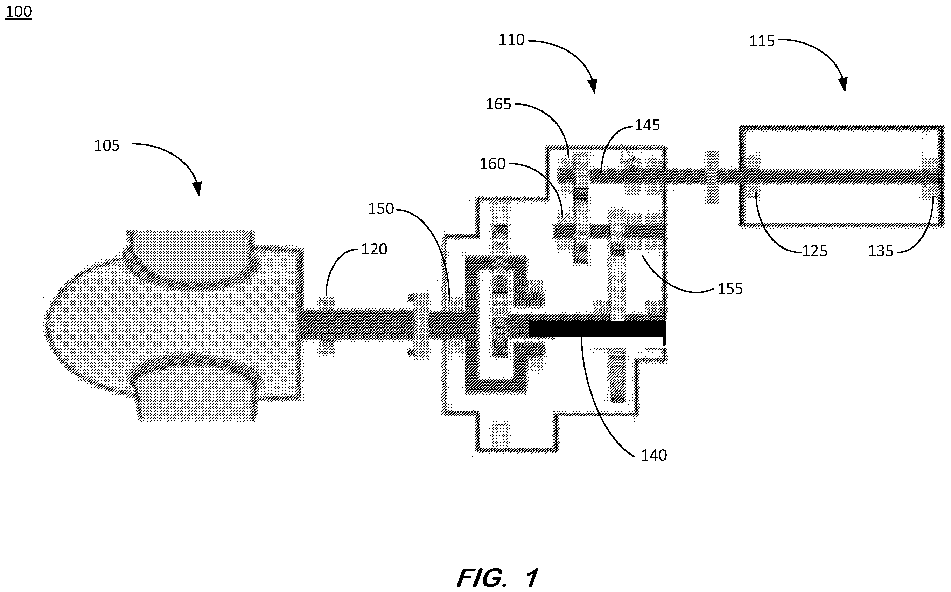

The present disclosure relates to processes and systems to detect and diagnose faults and other conditions based on a pattern or spectral shape of vibration spectrum from an asset. FIG. 1 is an illustrative schematic diagram example of a wind turbine 100 that may be monitored to determine a health status of the wind turbine generator. Wind turbine generator (or simply turbine) 100 is illustrative of a type of asset to which the processes and systems disclosed herein may be applied. In some aspects, not forming part of the invention, the present disclosure including the processes and systems disclosed herein might be embodied and implemented in other applications, environments, and use-cases other than the specific examples set forth below.

Regarding FIG. 1, turbine 100 may be monitored to determine the working condition or health of various components of the turbine. In the case of a turbine as illustrated in FIG. 1, the drivetrain bearings of turbine 100 may be the components of interest. In other assets, other components may be the subject(s) of interest. Turbine 100 includes a rotor 105 and drivetrain including three (3) main bearings. The bearings include a main bearing 120 located closest to rotor 105; generator bearings 115, including inboard and outboard bearing 125 and 135, that couple to and rotate a generator (not shown) that generates energy; and drivetrain bearings located at 110 between the main bearing and the generator bearings. The drivetrain bearings in the example of FIG. 1 include four(4) different sets of bearings on low speed shaft 140 and high speed shaft 145 that are collectively referred to as the drivetrain bearings. The four sets of the drivetrain bearings operate to step up the rotations per minute (rpm) from about 15 - 20 rpms at the rotor to about 1440 rpms at the generator side. The drivetrain bearings may be divided into three(3) stages, including (1) a low speed stage (LSS) 150; (2) an intermediate stage including a low speed intermediate stage (LSIS) 155 and a high speed intermediate stage (HSIS) 160; and (3) a high speed stage (HSS) 165. Sensors, such as an accelerometer, proximity probe or acoustic sensor, may be deployed in the drivetrain gearbox to capture vibrations created by the different stages thereof. In some embodiments, although sensors might be placed in the different stages of the drivetrain, some vibrations from one or more of the stages might bleed into the vibration data acquired by another stage.

Data captured by sensors in the drivetrain may primarily be waveform data of the vibrations, displacements or acoustic signatures generated by the drivetrain components (e.g., high speed shaft and low speed shaft bearings) and derivatives of those waveforms. In some aspects, the primary types of data that might be captured can include asynchronous waveforms and synchronous waveforms. An asynchronous waveform is a type of vibration signal that is recorded for a fixed amount of time. Since the assets of the example of FIG. 1 (i.e., turbines) themselves operate at variable speeds, the fixed time recording means that the time duration need not be multiple of the period of any specific bearing (i.e., asynchronous).

As referred to herein, a synchronous waveform is a waveform that is recorded over a certain number of revolutions of a bearing and may not be stored directly. Instead, derived spectrograms related to the waveforms may be stored for a certain period of time (e.g., every 4 hours). The direct FFT (Fast Fourier Transform) of the waveform is referred to as a high resolution spectrum, whereas a finer and more detailed spectrum derived post enveloping via a digital signal process (DSP) is referred to as a synchronous (or sync)enveloped spectrum. Plots of both a high resolution spectrum and a sync enveloped spectrum may capture and reveal distinctly visible faults including sidebands (if any), while the high-resolution spectrum may display the fault signatures in a plot with a higher noise floor or a plot containing signatures not directly related to component wear or damage.

In some applications, the signatures for high speed stage faults may be more pronounced in the sync enveloped spectrum data. In some aspects, some faults might exhibit their signature in sync enveloped spectrum data before exhibiting any anomaly in the high resolution spectrum data, over a typical lifecycle of a gearbox bearing. In some embodiments herein, sync enveloped spectrum data may be used for HSS fault detection algorithms (discussed in greater detail below).

Regarding frequency spectrum plots, a brief discussion is presented for a better understanding of the frequency ranges they represent. Referring to the example of FIG. 1 where the HSS shaft 145 has an rpm of about 1440, the HSS shaft will have a rotational frequency of 24Hz. This fundamental frequency is referred to as the 1X of the HSS. Every rotating part inside the gearbox has a 1X fundamental frequency. For example, the HSIS shaft also rotates and has a 1X fundamental frequency that is related to HSS 1X through the following relation:

$$HSIS\ 1X = \frac{HSS\ 1X}{gear\ ratio_{HSIS,HSS}}\ .$$

Thus, if the gear ratio of HSIS to HSS is 3, the fundamental frequency values will be *HSS 1X = 24 Hz* and *HSIS 1X = 8 Hz.*

It is noted that different faults may have their own 1X values. In some aspects, the 1X values of faults may be viewed as the frequency at which a particular fault creates noise within the system. For example, a crack in the bearing outer race of a bearing may cause a mild disturbance/noise or vibration signature every time a ball traverses the crack. As such, the outer race fault 1X fundamental frequency (also called the Bearing Ball Pass Frequency Outer-race (BPFO) 1X) will be the frequency of that generated noise.

In some aspects, the spectrum of each stage of the drivetrain of the wind turbine of the FIG. 1 example may usually represent a range of frequencies with the maximum being the multiple of a certain shaft frequency. For example, the stage 3 sync enveloped spectrum data for a particular model of turbines may represent frequencies up to a maximum value of about 50X HSS. It is noted that this and the 1X HSS value are all linked to the actual Revolutions Per Minute (RPM)of the shafts at a given point in time and may vary depending on the particular subject asset. Similarly, the stage 2 max frequency may typically be about 50 or 100X LSIS.

For the example of FIG. 1 related to detecting faults in drivetrain bearings of a wind turbine, the faults of primary concern may include three fault locations in bearings. In particular, the fault locations may include the outer race, the inner race, and the rolling element itself of the bearing. For a specific bearing design, the outer race, the inner race, and the rolling elements have a natural frequency. In the event there is a fault in any of those locations, the resulting vibration signal as captured by a sensor (e.g., accelerometers) will exhibit those natural frequencies. For example, if a bearing has a defect in its outer race, then a vibration impulse will be generated and recorded every time one of the rolling elements touches the defective location. The frequency of this impulse will be same as the outer race's natural fault frequency (referred to herein as the Ball Pass Frequency Outer-race or BPFO). Similarly, bearing fault frequencies for inner race (i.e., IRBP or Inner-race Ball Pass) defects and rolling element (i.e., Ball Spin or BS) defects are referred to as Ball Pass Frequency Inner-race (BPFI) and Ball Spin Frequency (BSF) faults.

In some contexts, an analysis of the amplitudes of the fault frequency information can be used to determine whether a particular type of fault is present in a bearing of an asset if the fault frequency information for a particular asset is available and known. However, there are several limitations to this approach that is based on knowledge of the fault frequency information. First, the fault frequency information may not be readily available, if at all. Fault frequencies might be known through mathematical formulae that relate the design parameters such as, for example, the number of rolling elements, pitch angle, roller diameter, pitch diameter, etc. to the particular defect frequencies (e.g., BPFI, BPFO and BSF). However, the design parameters vary greatly from one bearing to another and may not be known or even supplied to a vibration engineer or other entity.

Secondly, the fault frequency might not be present in the spectra (i.e., the "faulty" spectra) of a particular asset. In theory, the natural fault frequencies (e.g., BPFO, BPFI, etc.) should be present where the corresponding fault is present in a bearing. However, in practice that may not always be the case. For example, it is possible that a frequency close to a BPFO is getting excited in a bearing that actually has ORBP issues. As this example demonstrates, an over-reliance on theoretical fault frequencies can be detrimental in a practical (i.e., real-world) application since faults characterized by amplitude spikes might actually occur at a frequency different than the expected/theoretical frequency and might not be seen when looking for faults at the expected/theoretical frequency. The deviation in an actual fault signature is often caused by secondary damage to the bearing in and around the location of the initial fault, causing sideband energy or frequency shifts in the signature produced when the defect is encountered by a rolling element.

These limitations of relying on known fault frequencies often necessitates that a vibration engineer review spectrum data for even common fault patterns (e.g., faults in high speed stages). This manual review by expert(s) can be costly and/or leads to productivity losses.

Some previous techniques, processes, and systems, include a vibration engineer looking at a report with some of the subject turbines flagged as being a concern. For each flagged turbine, the vibration engineer might look at the different spectral plots of that turbine to ascertain whether the suspected fault is indeed present. This type of inspection might include a review of the spectral DEI (Dynamic Energy Index) numbers apart from visual inspection of the spikes and aligning them with the natural fault frequencies, where this amount of effort is necessitated by the fact that these previous types of systems rely on a thresholding algorithm that looks for a rise in amplitude at a specific location (i.e., frequency).

Some embodiments herein use asset (e.g., gearbox) agnostic algorithms to determine a defect based on the basic defect signatures (i.e., "patterns") in vibration spectrum data. An overview of some embodiments will be explained in the context of bearing signatures for ORBP, IRBP, BS, and other defects.

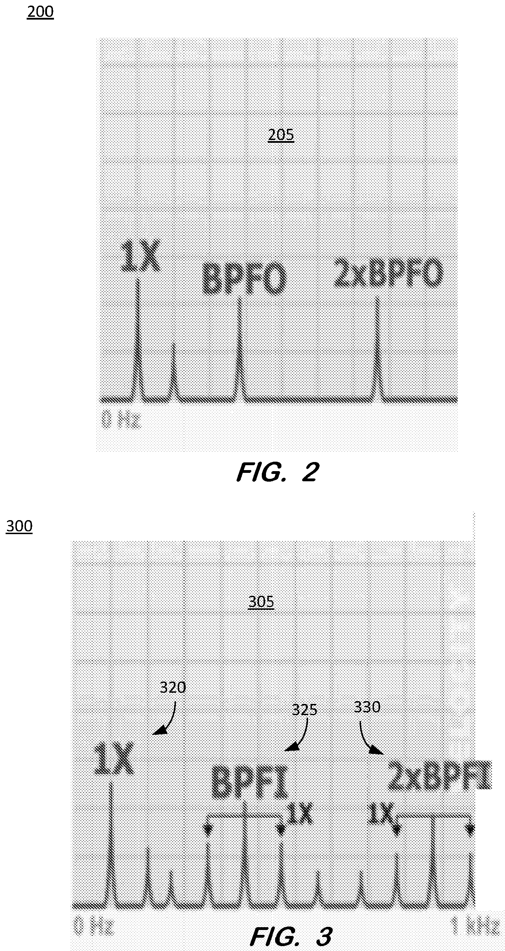

For an outer race defect in a bearing, a shock impulse will be recorded every time a rolling element of the bearing traverses the defective location. For these types of generated impulses, the ORBP frequency (BPFO) and its harmonics are present in the resulting spectra. FIG. 2 illustrates a frequency domain spectrum 200. Moving from left to right, the range of analyzed frequencies increases. The sync enveloped spectrum data for this example is shown at 205 of FIG. 1.

For an inner race defect in a bearing (i.e., an IRBP signature), the signature of an inner race fault is more complex than an ORBP signature. In some embodiments and configurations, the inner race of a bearing usually rotates with a shaft and thus the inner race defect location moves in and out of the bearing loading zone. As such, the shock impulse created when the bearing is in the loading zone is more pronounced than an impulse created when the bearing moves out of the loading zone. In this manner, the BPFI impulse signal gets amplitude modulated by the shaft's rotational frequency (referred to as the shaft IX). These factors result in the presence of a spike in amplitude at the BPFI frequency (and its harmonics), as well as the presence of one or two sidebands separated by the shaft IX frequency. An illustrative IRBP fault signature is depicted in a plot 300 of FIG. 3, where the frequency domain is shown at 305and the range of the analyzed frequencies increases from left to right. In the example of FIG. 3, the IX frequency is shown at 320 and the BPFI defects are shown at 325 and its harmonics frequency (e.g., at 330). As seen, the BPFI defects include sidebands IX apart from the peak center amplitude of the BPFI defect.

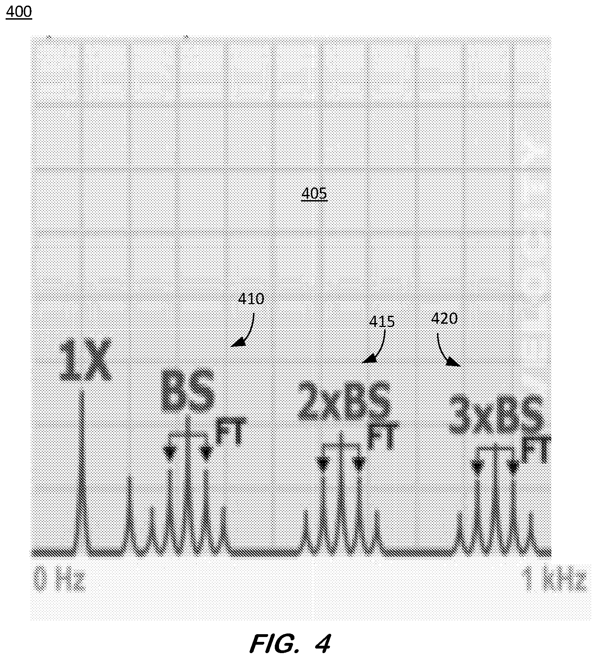

For a ball spin defect in a bearing (i.e., a BS signature), the signature pattern of a rolling element defect may be similar to an IRBP defect. As illustrated in FIG. 4, a BS signature 405 in spectrum 400 is manifested through the presence of ball spin frequency (BSF) 410, 415, and 420 and one or two sidebands separated by the cage IX frequency (denoted as FT) that may be about 0.3 - about 0.5 of the shaft IX frequency.

In some instances, there may be other fault signatures for which there are no existing detection algorithms. Some such examples may include some signatures pertaining to low speed stages of a turbine drivetrain that are visible only in data derived from stage 1 of the drivetrain.

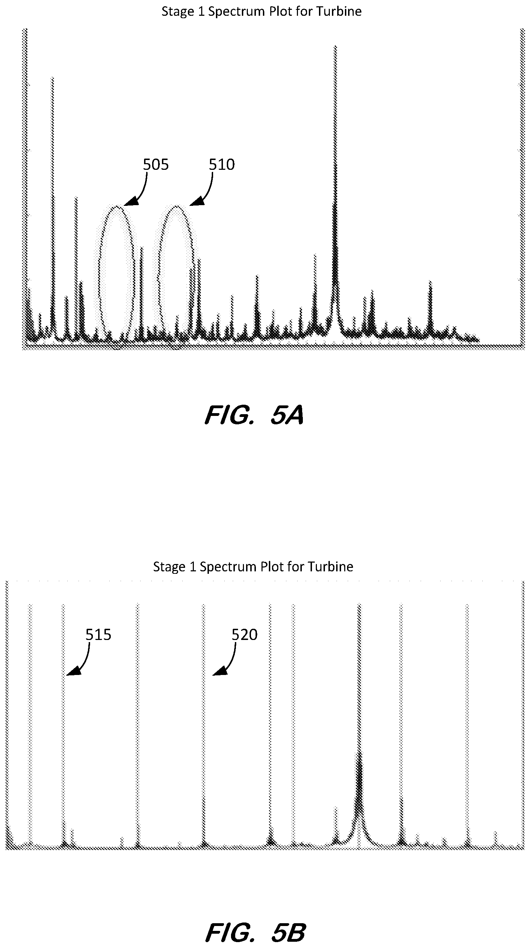

For example, a Planetary Bearing fault may be characterized by a distinctive 'haystack' pattern in a region between gear mesh harmonics. Unlike the sync enveloped spectrum in the examples of FIGS. 2 - 4 where any kind of high amplitude spike may be a potential indicator of a fault, the spikes in a low speed spectra plot as depicted in FIGS. 5A and 5B may appear in a normal or non-fault situation. In the plots of FIGS. 5A and 5B, FIG. 5A has a confirmed planetary bearing (PB) fault at 505 and 510, while FIG. 5B has no such issue. The markers (e.g., 515 and 520) indicate the natural frequencies that are present in the stage 1 low speed spectrum for the subject drivetrain. It is noted PB faults are not limited to low speed stages.

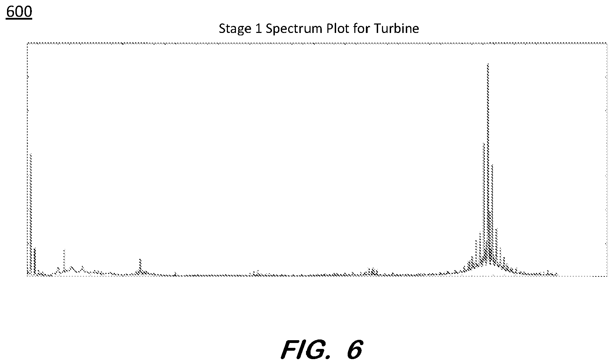

Another low speed stage (LSS) fault is the Ring Gear fault that exhibits a distinctive "sawtooth" pattern in the stage 1 high res data. FIG. 6 includes an illustrative example of stage 1 spectrum plot 600 for a wind turbine exhibiting a ring gear fault.

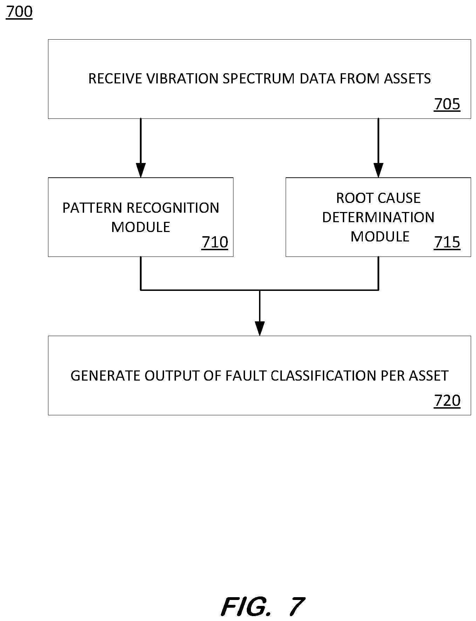

The present invention relates to a system (including software and hardware components) that receives wind turbine gearbox accelerometer data and uses pattern matching techniques to detect assets that display similar spectral shapes of the accelerometer vibration spectrum. FIG. 7 is an illustrative block diagram for some systems to execute some processes disclosed herein. Vibration spectrum data 705 is received by system 700. The system includes a pattern matching module 710 that receives wind turbine gearbox accelerometer data and uses pattern matching techniques to identify and determine (e.g., calculate based on mathematical algorithms) assets that display similar shapes in their accelerometer vibration spectrum. System 700 also includes a root cause detection module 715. Root cause detection module 715 may operate to determine at least one of several known root causes of fault(s) that may be affecting the asset (e.g., turbine) and exhibited in the vibration spectrum data. System 700 operates to identify and determine, based on an application of domain derived pattern recognition rules for the vibration spectrum data 705, an exact cause for known faults, as well as identify unexpected or novel faults based on the pattern matching techniques based on the vibration spectrum data. An output record including a fault classification for each of the assets is generated by a report generating module 720 based on inputs from modules 710 and 715. The generated report is saved and optionally used in further processing (e.g., analytics, etc.) operations.

In some embodiments, the assets may each be a wind turbine as discussed in example of FIG. 1. However, the systems and processes disclosed herein are not necessarily limited to an analysis of vibration spectrum data and the detection and identification of faults in the drivetrains of wind turbines.

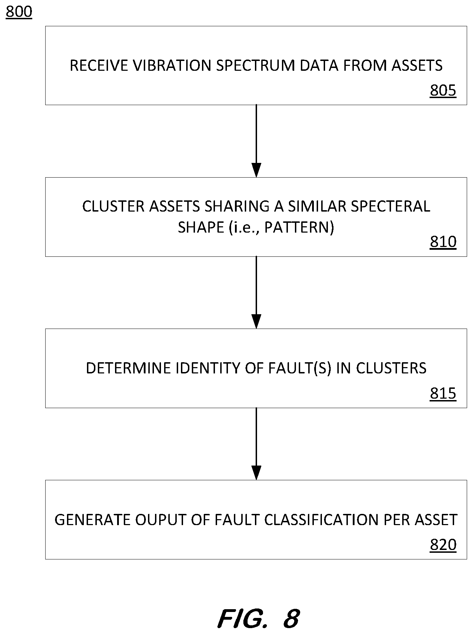

FIG. 8 is an overview of a process to detect and identify faults in assets based on pattern matching techniques of vibration spectrum data for one or more assets. The process of flow diagram 800 outlines a process that holistically looks at the shape of an asset's vibration spectrums data, as opposed to, for example, looking for an amplitude at a specific frequency.

At operation 805, vibration spectrum data is received from a plurality of assets. The vibration spectrum data is received from a plurality of wind turbines deployed in a "wind farm". The data received at operation 805 may include one or more files, wherein vibration spectrum data for each of the subject assets is identifiable in the data received at operation 805.

At operation 810, a pattern matching module or other system or device having similar functionality ingests the vibration spectrum data from each wind turbine asset. In some embodiments, operation 810 may also include other processing aspects such as, but not limited to, averaging the received data for each asset over a certain time frame (i.e., period of time). In some embodiments, operation 810 may use a clustering algorithm or a combination of clustering algorithms to finalize pairing of assets. In some embodiments, one or more features may be extracted from the received vibration spectrum data by operation 810, in an effort to reduce a dimensionality of the data, on a per asset basis.

At operation 815, a Root Cause detection process may use clustering algorithms on the vibration spectrum (e.g., lower dimensional) data to identify the assets (e.g., turbines) that share a similar spectral shape. Assets determined to have a similar spectral shape are group together. The groupings of assets having similar spectral shapes (i.e., patterns) are referred to herein as "clusters". Assets that are in the same cluster are similar by spectral shape and are therefore of similar fault or health condition/status.

In some embodiments, a granularity of the clustering results of operation 810 might be too high for an intended or practical use. For example, in some instances only turbines facing upwind or downwind HSIS IRBP fault might be grouped together, while an vibration engineer may be interested in faults only at a summary fault level of HSIS IRBP (i.e., excluding differentiations in upwind or downwind).

Proceeding to operation 815, a Root Cause Identification module or other system(s) and device(s) having a similar functionality operate to identify an exact cause of the problem or fault characterized by the spectral shape (i.e., signature) in the clusters of different shape vibration signals.

In some aspects, a nonparametric clustering algorithm of operation 810 might excel at grouping assets based on the spectral shape of the individual asset's vibration spectrum data, and will not be able to identify the exact nature of the faults represented in the clusters (i.e., groups). In some embodiments, algorithm(s) to determine the clusters based on identifying vibration spectrum data having a similar spectral shape include one of a hierarchical clustering algorithm, a k-means algorithm, a nearest neighbor algorithm, and at least one algorithm based on a combination of clustering methods. As used herein, a hierarchical clustering algorithm assigns each asset to its own cluster and then successively merge pairs of clusters that are closest to each other. The process can be repeated until a desired number of clusters are found. As used herein, a k-means algorithm consists of selecting a few of the spectra randomly as cluster centroids. Each of the other spectra are then assigned to these clusters based on their distance from the centroids. The centroids are updated and the process is repeated until the algorithm converges (i.e., no changes in the cluster assignments or centroids).

In some embodiments, root cause identification algorithm(s) at operation 815 may take a data based, gearbox agnostic approach to detect the particular fault in the clusters. In some instances, a process for detecting or determining a particular fault at operation 815 may be determined in a gearbox agnostic way, to the extent possible. In some embodiments, multiple different algorithms may be used to detect the anomalous spikes, sidebands, and other characteristic features in a specific spectrum and based on the different patterns (e.g., a spike at a certain location along with sidebands, a specific haystack-like pattern, a presence of asynchronous harmonics, a sawtooth pattern, etc.) or signature generate a fault diagnosis such as, for example, Inner Race/Outer Race/Ball Spin issues in higher speed stages and Planet Bearing and other faults in lower speed stages.

Operation 820 includes a final output that combines the outputs of a pattern matching module and a root cause identification module to generate a unified view including a fault determination for the plurality of assets that may be better than a strictly clustering or a strictly rule based approach.

In some embodiments, an output of operation 820 may be presented via a user interface frontend that might include textual, graphical, and other visualization representations that provide a mechanism for a user to view and analyze an asset's spectrum, in isolation and/or in comparison with other assets that may exhibit similar spectral patterns.

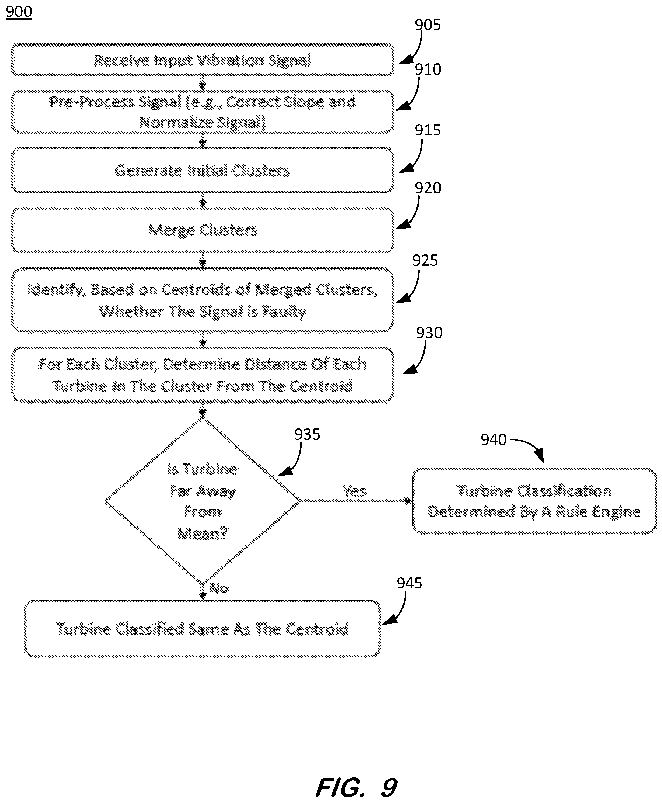

FIG. 9 relates to an overall fault detection and determination process 900, in accordance with some embodiments herein. At operation 905 input vibration signals for a plurality of assets is received. The received vibration spectrum data may be pre-processed at operation 910 in an effort to prepare it for further processing. Some (pre-)processing techniques of operation 910 may include, for example, correcting signal slope and/or normalization of the received signals.

At operation 915, an initial clustering of the assets based on a spectral shape of their associated vibration signals is performed. Operation 915 may include executing a hierarchical clustering function. Operation 920 may further merge clusters based on, for example, their centroids being less than some threshold value (e.g., $<1\sigma$) away from a mean centroid distance for the clusters.

Having grouped the different assets into clusters based on their spectral shapes at operations 915 and 920, operation 925 operates to identify, based on the centroids of merged clusters, whether the signal in each of the merged clusters is indicative of a fault in the asset.

Operation 930 determines, for each cluster, a distance of each asset (e.g., turbine) in the cluster from the centroid of the cluster. If the asset is relatively far away from the mean based on some threshold value (e.g., $>0.75\sigma$) as determined at operation 935, then process 900 advances to operation 940 where the asset may have its condition classified by, for example, a rule engine since the particular asset under consideration is sufficiently different from the centroid asset in its cluster to be classified the same.

If, at operation 935, the asset under consideration is not relatively far away from the mean based on some threshold value (e.g., $<0.75\sigma$), then process 900 advances to operation 945 where the asset may be classified the same as the centroid asset in its cluster.

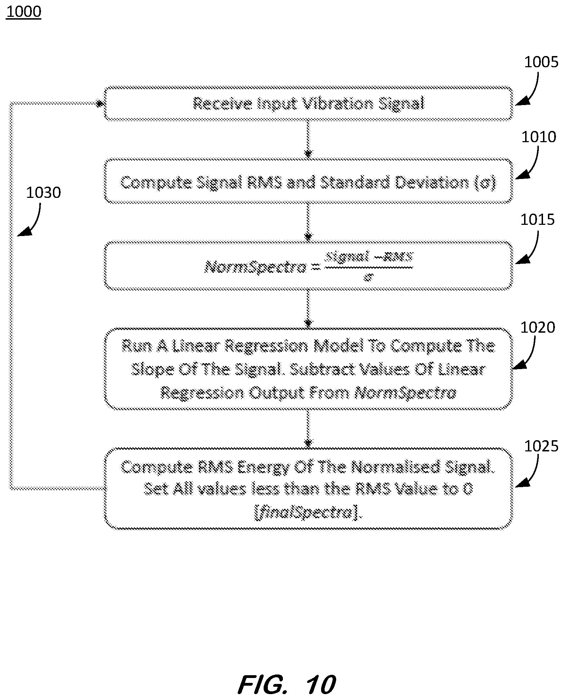

FIG. 10 is an example of a flow diagram 1000 of a signal normalization function that may be executed in the performance of operation 910 of FIG. 9, in accordance with some embodiments herein. At operation 1005, input vibrations signals are received and at operation 1010 signal RMS (root mean squared) and standard deviation ($\sigma$) values are calculated. Further, a normalized signal (e.g., *NormSpectra*) is computed at operation 1015, based on the relationship shown in FIG. 1000.

At operation 1020, a linear regression model is executed to compute the slope of the signal. The values of the linear regression output are further subtracted from the normalization values computed at operation 1015. At operation 1025, the RMS energy of the normalized signal is computed. All values less than the RMS value (calculated at operation 1010) are set to 0 (e.g., *finalSpectra*).

Process 1000 is repeated for all signals of each asset being evaluated, as indicated by feedback loop 1030.

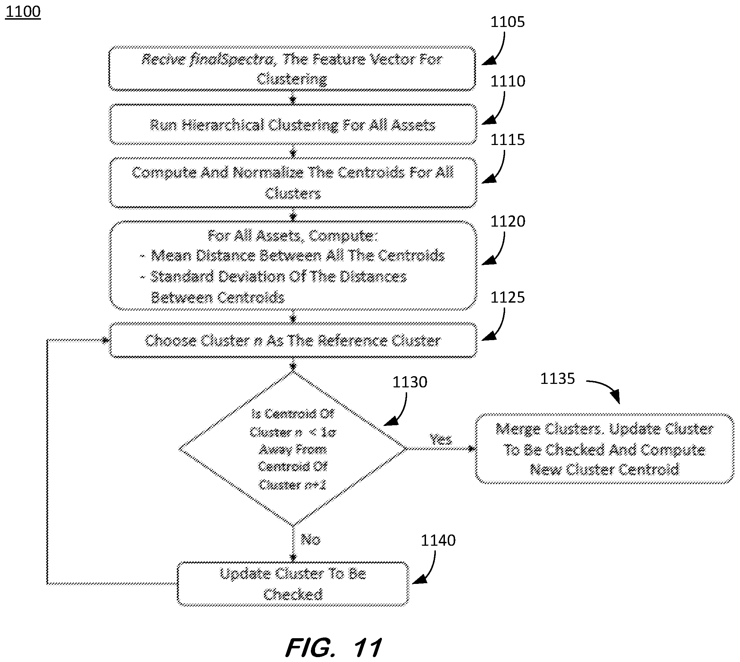

FIG. 11 is an example of a flow diagram 1100 of a signal clustering function that may be executed in the performance of operations 915 and 920 of FIG. 9, in accordance with some embodiments herein. At operation 1105, input vibrations signals are received and at operation 1110 a hierarchical clustering for all assets is executed. Operation 1115 functions to compute and normalize the centroids for all of the clusters. At operation 1120, calculations are made to compute a mean distance between all of the centroids and a standard deviation of the distances between the centroids.

At operation 1125, a cluster (n) is chosen as a reference cluster and operation 1130 operates to determine whether the clusters under consideration are sufficiently close (i.e., similar) to be merged together. Operation 1130 determines whether the centroid of cluster $n$ $<1\sigma$ away from the centroid of cluster $n + 1$. If the determination of operation 1130 is "yes", then process 1100 advances to operation 1135 where cluster $n$ *and* $n + 1$ are merged, the cluster to be checked next is updated, and the centroid of the newly merged cluster is computed.

If the determination of operation 1130 is "no", then process 1100 advances to operation 1140 where cluster $n$ *and* $n + 1$ are not merged and the cluster to be checked next is updated. Thereafter, operations 1125 - 1140 are repeated until no further merging of clusters is possible.

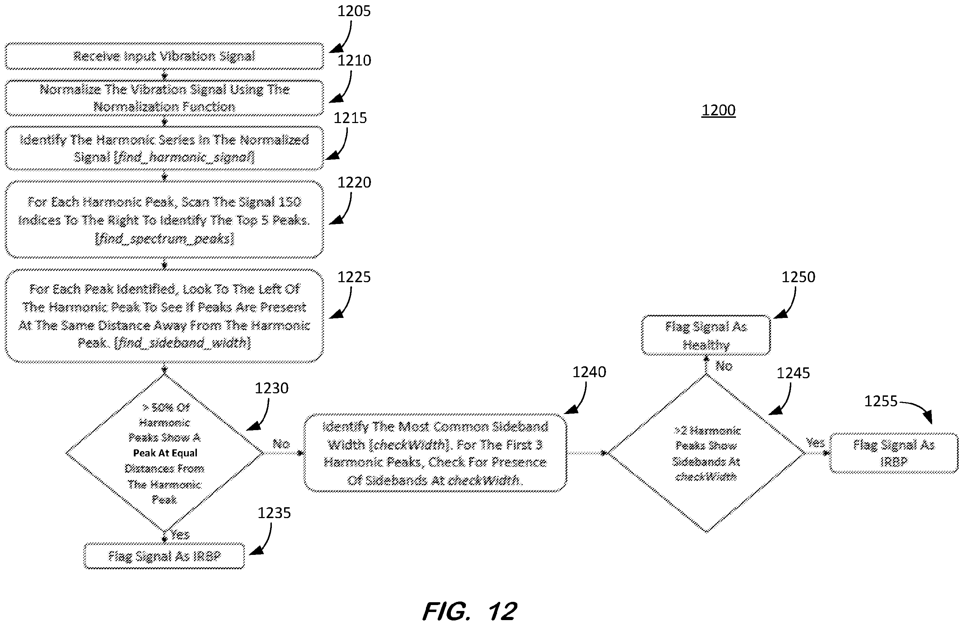

FIGS. 12 - 14 each relate to different processes or rule engine algorithms to determine specific High Speed Shaft (HSS) faults that might manifest in the vibration spectrum data of wind turbine assets. FIG. 12 relates to an example of a flow diagram 1200 of a "rule engine" to determine a classification of a fault status of an asset (e.g. operation 940 of FIG. 9). In particular, flow diagram 1200 is an example process to detect IRBP type of faults in a HSS. At operation 1205, input vibrations signals are received and at operation 1210 the received vibration signals are normalized. Continuing to operation 1215, the harmonic series in the normalized signal is identified and for each harmonic peak, a scan of the signal 150 indices to the right to identify the top 5 peaks is performed at operation 1220. At operation 1225 for each peak identified, the signal is examined to see if peaks are present at the same distance away from the harmonic peak to find the sideband width.

At operation 1230, if >50% of the harmonic peaks exhibit a peak at equal distances from the harmonic peak, then the signal is classified as being indicative of an IRBP fault at operation 1235. If <50% of the harmonic peaks do not exhibit a peak at equal distances from the harmonic peak at 1230, then process 1200 proceeds to operation 1240 where the most common sideband width is identified and for the first 3 harmonic peaks a check is executed to determine whether there are sidebands at the identified sideband width.

If >2 harmonic peaks show sidebands at the identified sideband width, as determined at operation 1245, then the signal is classified as being indicative of an IRBP fault at operation 1255. Otherwise, the signal is classified as being indicative of a "healthy" asset at operation 1250.

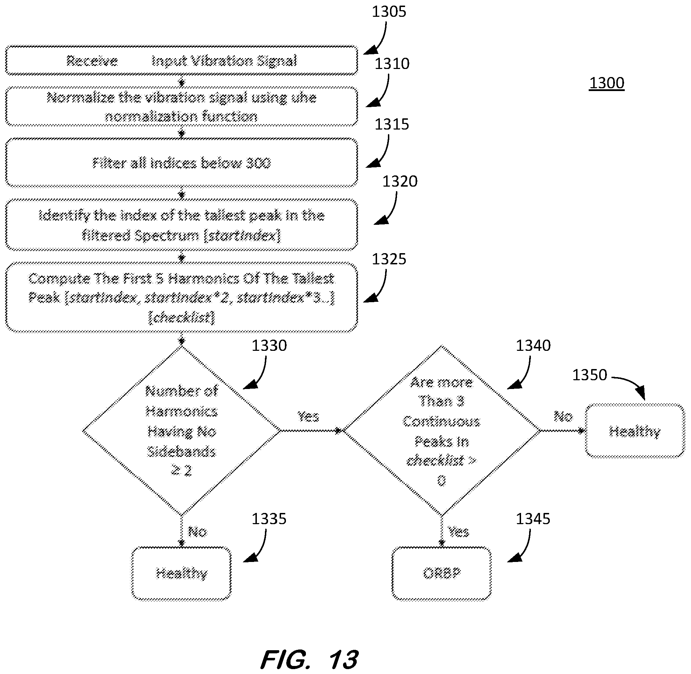

FIG. 13 relates to an example of a flow diagram 1300 of a "rule engine" to determine a classification of a fault status of an asset (e.g. operation 940 of FIG. 9). In particular, flow diagram 1300 is an example process to detect ORBP type of faults in a HSS. At operation 1305, input vibrations signals are received and at operation 1310 the received vibration signals are normalized. Operation 1315 operates to filter all indices below 300. Operation 1320 identifies the index of the tallest peak in the filtered spectrum from operation 1315.

At operation 1325, the first 5 harmonics of the tallest peak are calculated to form a checklist. If at operation 1330 the number of harmonics having no sidebands is not ≥ 2 (i.e., < 2), then the asset associated with the signal is deemed to be "healthy" at operation 1335. If operation 1330 determines the number of harmonics having no sidebands is ≥ 2, then a determination is made at operation 1340 regarding whether there are more than 3 continuous peaks in the checklist (from operation 1325) that are > 0. If there are more than 3 continuous peaks in the checklist that are > 0, then the signal is classified as being indicative of an ORBP fault at operation 1345. Otherwise, the asset associated with the signal is deemed to be "healthy" at operation 1350.

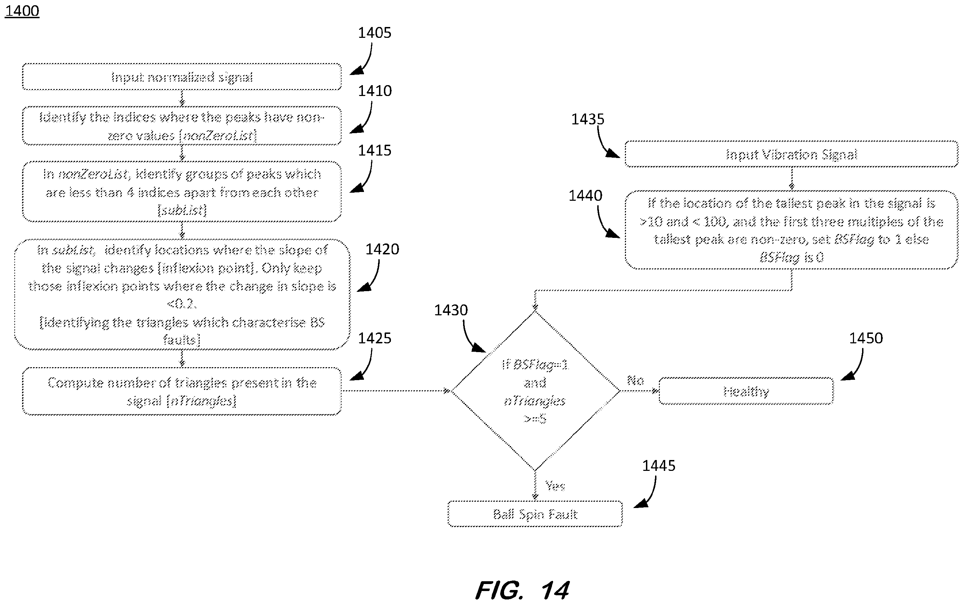

FIG. 14 is an example flow diagram 1400 for a "rule engine" to determine a classification of a fault status of an asset (e.g. operation 940 of FIG. 9). In particular, flow diagram 1400 is an example process to detect BS type of faults in a HSS. At operation 1405, input normalized vibrations signals are received and at operation 1410 the received vibration signals are examined to identify the indices where peaks have non-zero values. The indices identified as having nonzero values are saved to "nonZeroList". For "nonZeroList" identified indices, operation 1415 identifies groups of peaks that are less than 4 indices apart from each other and save them to a "subList".

At operation 1420, the "subList" is examined to identify locations where the slope of the signal changes (i.e., the inflection point). Moreover, only those inflection points where the change in slope is < 0.2 (i.e., identifying the triangles that characterize BS faults) are retained for further processing. At operation 1425, the number of triangles present in the signal is computed ("nTriangles") and process 1400 advances to operation 1430.

Referring to operation 1435, input vibrations signals are received and at operation 1440 if the location of the tallest peak in the signal is > 10 and < 100 and the first three multiples of the tallest peak are non-zero, then a "BSFlag" is set to 1, otherwise the "BSFlag" is set to 0. From operation 1440, process 1400 advances to operation 1430.

At operation 1430, a determination is made whether the "BSFlag" = 1 and "nTriangles" ≥ 5. If the "BSFlag" = 1 and "nTriangles" ≥ 5, then the signal is identified as being indicative of asset having a BS fault. Otherwise, the asset associated with the signal is deemed to be "healthy" at operation 1450.

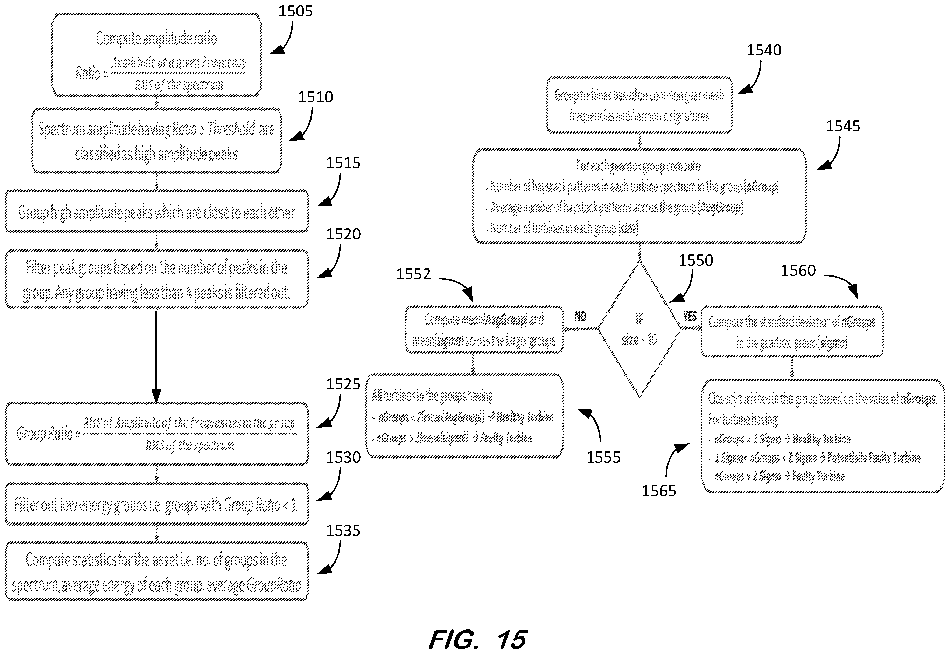

FIG. 15 relates to a rule engine or algorithm to determine specific low Speed Shaft (LSS) faults that might manifest in the vibration spectrum data of wind turbine assets. FIG. 15 includes two (2) flows, where flow 1501 is performed during a first pass of a signal and flow 1502 is performed during a second pass of a signal. Referring to flow 1501 and starting at operation 1505, an amplitude ratio is computed as detailed in FIG. 15. Spectrum amplitudes having an amplitude ratio greater than a threshold are classified as high amplitude peaks at operation 1510. At operation 1515, high amplitude peaks that are close to each other are grouped together.

At operation 1520, the grouped high amplitude peaks are filtered based on the number of peaks in the group, where any group having less than 4 peaks is filtered out. A "Group Ratio" is calculated as specified in FIG. 15 at operation 1525. At operation 1530, low energy groups are also filtered out, where a low energy group in the present example is a group having a "Group Ratio" < 1. At operation 1535, statistics for the asset under consideration are computed. The statistics might include the number of groups in the spectrum, average energy of each group, average GroupRatio, and other metrics.

Referring to flow 1502 and starting at operation 1540, the assets of the present example are grouped based on common gear mesh frequencies and harmonic signatures. At operation 1545 and for each gearbox group, the following values are calculated: number of haystack patterns in each turbine spectrum in the group ("nGroup"), average number of haystack patterns across the group ("AvgGroup"), and the number of turbines in each group ("size").

At operation 1550, if the "size" > 10, then the standard deviation of "nGroups" in the gearbox is calculated at operation 1560 and saved (e.g., "sigma"). At operation 1565, the turbines in the group are classified based on the value of "nGroups". For example, for turbines having "nGroups" < 1 "sigma", the turbine is classified as being "healthy"; for turbines having "nGroups" > 1 "sigma" and < 2 "sigma", the turbine is classified as being "potentially faulty"; and for turbines having "nGroups" > 2 "sigma", the turbine is classified as being "faulty".

At operation 1550, if the "size" is < 10, then the mean("AvgGroup") and mean("sigma") across the larger groups are calculated at operation 1552. At operation 1555, the turbines in the larger groups are classified based on the value of "nGroups". For example, for turbines having "nGroups" < 2[mean("AvgGroup")] are classified as being "healthy" and for turbines having "nGroups" > 2[mean("sigma")] are classified as being "faulty".

In some embodiments, processes and systems herein detect faults and a fault type directly based on high resolution spectra and are capable of significant savings in time and manual effort. In some instances, the technologies disclosed herein may, for example, double the productivity of a CMS expert (e.g., more turbines per analyst).

In some embodiments, processes and systems herein provide a mechanism to analyze and determine faults in vibration spectrum data from a wide variety of assets, including assets for which fault frequency information is not known and/or available to an analyst. In some embodiments, the processes disclosed herein may be executed, at least in part, automatically in response to one or more events or actions.

Some embodiments herein provide signature-based, asset (e.g., gearbox) independent/agnostic detection processes and systems that enable fault detection even when a specific natural fault frequency is absent and/or unknown.

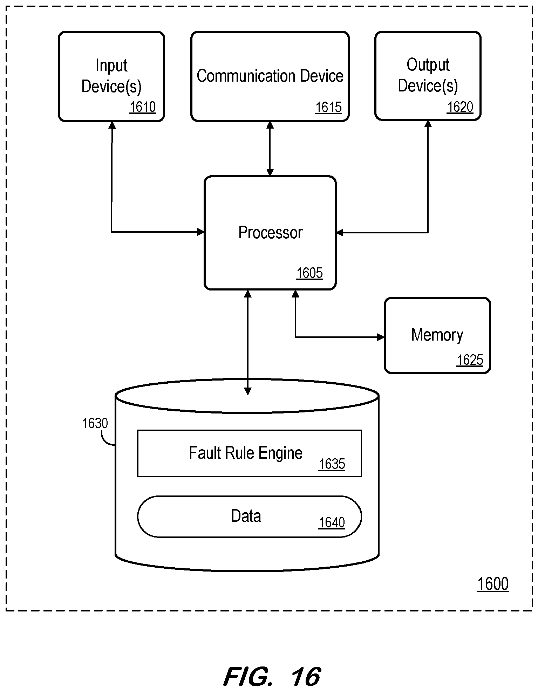

FIG. 16 is an illustrative block diagram of apparatus 1600 according to one example of some embodiments. Apparatus 1600 may comprise a computing apparatus and may execute program instructions to perform any of the functions described herein. Apparatus 1600 may comprise an implementation of server, a dedicated processor-enabled device, a user entity device, and other systems, including a cloud server embodiment of at least parts of a system disclosed herein. Apparatus 1600 may include other unshown elements according to some embodiments.

Apparatus 1600 includes processor 1605 operatively coupled to communication device 1615 to communicate with other systems, data storage device 1630, one or more input devices 1610 to receive inputs from other systems and entities, one or more output devices 1620 and memory 1625. Communication device 1615 may facilitate communication with other systems and components, such as other external computational assets and data. Input device(s) 1610 may comprise, for example, a keyboard, a keypad, a mouse or other pointing device, a microphone, knob or a switch, an infra-red (IR) port, a docking station, and/or a touch screen. Input device(s) 1610 may be used, for example, to enter information into apparatus 1600. Output device(s) 1620 may comprise, for example, a display (e.g., a display screen) a speaker, and/or a printer.

Data storage device 1630 may comprise any appropriate persistent storage device, including combinations of magnetic storage devices (e.g., magnetic tape, hard disk drives and flash memory), solid state storages device, optical storage devices, Read Only Memory (ROM) devices, Random Access Memory (RAM), Storage Class Memory (SCM) or any other fast-access memory.

Fault rule engine 1635 may comprise program instructions executed by processor 1605 to cause apparatus 1600 to perform any one or more of the processes described herein, including but not limited to aspects disclosed in FIGS. 8 - 15. Embodiments are not limited to execution of these processes by a single apparatus.

Data 1640 (either cached or a full database) may be stored in volatile memory such as memory 1625.

Data storage device 1630 may also store data and other program code for providing additional functionality and/or which are necessary for operation of apparatus 1600, such as device drivers, operating system files, etc. Data 1650 may include data related an asset that may be used in the identification of faults herein.

Although specific features of various embodiments of the disclosure may be shown in some drawings and not in others, this is for convenience only. In accordance with the principles of the disclosure, any feature of a drawing may be referenced and/or claimed in combination with any feature of any other drawing.

This written description uses examples to disclose the embodiments, including the best mode, and also to enable any person skilled in the art to practice the embodiments, including making and using any devices or systems and performing any incorporated methods. The patentable scope of the disclosure is defined by the accompanying claims. It should be noted and understood that there can be improvements and modifications made of the present invention described above without departing from the scope of the invention as set forth in the accompanying claims.

**Claims**

1. A computer-implemented method, the method comprising:

   receiving vibration spectrum data from a plurality of different assets (805);
   determining, based on a shape of the vibration spectrum data for each of the plurality of assets, clusters for the plurality of assets, assets being grouped in a same cluster having vibration spectrum data of a similar spectral shape (810);
   determining for each of the clusters, based on an application of domain derived pattern recognition rules for the vibration spectrum data, one of a plurality of fault classifications (815);
   generating an output including an association of each of the plurality of assets with the fault classification of the cluster in which the particular asset is grouped (820); and
   saving a record of the output to a data store;
   and wherein the plurality of assets are each a wind turbine;
   and wherein the determining of the clusters for the plurality of assets is accomplished by executing an algorithm formulated to identify vibration spectrum data having a similar spectral shape;
   and wherein the algorithm is one of a hierarchical clustering algorithm, a k-means algorithm, a nearest neighbor algorithm, and at least one algorithm based on a combination of clustering methods.

**2.** The method of claim 1, wherein the plurality of fault classifications includes at least one of the following: healthy, one or more known fault types, and unknown.

**3.** The method of claim 2, wherein the one or more known fault types include at least one of an Inner Race Ball Pass fault an Outer Race Ball Pass fault, a Ball Spin fault, a Planetary Bearing fault, and a Ring Gear fault.

**4.** The method of any of the preceding claims, wherein the vibration spectrum data is received from two different stages for at least one of the plurality of different assets.

**5.** The method of claim 4, further comprising, for each of the two different stages of the at least one of the plurality of different assets:

determining, based on a shape of the vibration spectrum data, clusters for the plurality of assets;

determining for each of the clusters, based on an application of domain derived pattern recognition rules for the vibration spectrum data, one of a plurality of fault classifications; and

generating an output including an association of each of the plurality of assets with the fault classification of the cluster in which the particular asset is grouped.

**6.** The method of any of the preceding claims, wherein the received vibration spectrum data is, for each of the plurality of assets, averaged over a certain period of time.

**7.** The method of claim 6, wherein the received vibration spectrum data comprises multiple spectra for each of the plurality of assets.

**8.** The method of any of the preceding claims, further comprising determining at least one fault in the vibration spectrum data wherein the determining of the identification of the at least one fault in the vibration spectrum data is accomplished by executing an algorithm formulated to detect the at least one fault.

**9.** The method of any of the preceding claims, further comprising extracting, on a per asset basis, at least one feature from the received spectrum data for the plurality of assets to reduce a dimensionality of the spectrum data.

**10.** The method of claim 9, wherein the determining of the clusters for the plurality of assets is performed on the reduced dimensionality spectrum data.

**11.** The method of claim 1, wherein the wind turbine includes at least one of a high speed shaft and a low speed shaft and the determining of the clusters for the plurality of assets and the determining of the identification of at least one fault in the vibration spectrum data is executed independently for each of the at least one high speed shaft and the low speed shaft.

**12.** A system, comprising

a memory storing processor-executable instructions; and
one or more processors to execute the processor-executable instructions to:

receive vibration spectrum data from a plurality of different assets (805);
determine, based on a shape of the vibration spectrum data for each of the plurality of assets, clusters for the plurality of assets, assets being grouped in a same cluster having vibration spectrum data of a similar spectral shape (810);
determine for each of the clusters, based on an application of domain derived pattern recognition rules for the vibration spectrum data, one of a plurality of fault classifications (815);
generate an output including an association of each of the plurality of assets with the fault classification of the cluster in which the particular asset is grouped (820); and
save a record of the output in a data store;
and wherein the plurality of assets are each a wind turbine;
and wherein the determining of the clusters for the plurality of assets is accomplished by executing an algorithm formulated to identify vibration spectrum data having a similar spectral shape;
and wherein the algorithm is one of a hierarchical clustering algorithm, a k-means algorithm, a nearest neighbor algorithm, and at least one algorithm based on a combination of clustering methods.

**Patentansprüche**

**1.** Ein Computer-implementiertes Verfahren, wobei das Verfahren umfasst:

Empfangen von Schwingungsspektrumsdaten von einer Vielzahl verschiedener Anlagen (805);
Bestimmen, basierend auf einer Form der Schwingungsspektrumsdaten für jedes der Vielzahl von Anlagen, von Clustern für die Vielzahl von Anlagen, wobei die Anlagen in einem gleichen Cluster gruppiert werden, die Schwingungsspektrumsdaten mit einer ähnlichen Spektrumsform aufweisen (810);

Bestimmen einer von einer Vielzahl von Fehlerklassifizierungen (815) für jeden der Cluster, basierend auf einer Anwendung von aus dem Bereich abgeleiteten Mustererkennungsregeln für die Schwingungsspektralsdaten;

Erzeugen einer Ausgabe, die eine Zuordnung jeder der Vielzahl von Anlagen von zu der Fehlerklassifizierung des Clusters aufweist, in dem die bestimmte Anlage gruppiert ist (820); und Speichern einer Aufnahme der Ausgabe in einem Datenspeicher;

und wobei es sich bei der Vielzahl der Anlagen jeweils um eine Windkraftanlage handelt;

und wobei die Bestimmung der Cluster für die Vielzahl von Anlagen durch Ausführen eines Algorithmus erreicht wird, der formuliert ist, um Schwingungsspektrumsdaten mit einer ähnlichen Spektrumsform zu identifizieren;

und wobei der Algorithmus einer der folgenden ist: ein hierarchischer Clustering-Algorithmus, ein k-means-Algorithmus, ein Nearest-Neighbour-Algorithmus und mindestens ein Algorithmus, der auf einer Kombination von Cluster-Verfahren basiert.

2. Verfahren nach Anspruch 1, wobei die Vielzahl von Fehlerklassifizierungen mindestens eine der folgenden aufweist: gesund, ein oder mehrere bekannte Fehlertypen und unbekannt.

3. Verfahren nach Anspruch 2, wobei der eine oder die mehreren bekannten Fehlertypen mindestens einen der folgenden Fehler aufweisen: Inner-Race-Ball-Fehler, Outer-Race-Ball-Fehler, Ball-Spin-Fehler, Planetary-Bearing-Fehler und Ring-Gear-Fehl er.

4. Verfahren nach einem der vorhergehenden Ansprüche, wobei die Schwingungsspektrumsdaten von zwei verschiedenen Stufen für mindestens eine der Vielzahl der verschiedenen Anlagen empfangen werden.

5. Verfahren nach Anspruch 4, das ferner umfasst, dass für jede der beiden unterschiedlichen Stufen des mindestens einen der Vielzahl von unterschiedlichen Anlagen:

Bestimmen von Clustern für die Vielzahl von Anlagen basierend auf einer Form der Schwingungsspektrumsdaten;
Bestimmen einer von einer Vielzahl von Fehlerklassifizierungen für jeden der Cluster, basierend auf einer Anwendung von aus dem Bereich abgeleiteten Mustererkennungsregeln für die Schwingungsspektrumsdaten;

Erzeugen einer Ausgabe, die eine Zuordnung jeder der Vielzahl von Anlagen mit der Fehlerklassifizierung des Clusters aufweist, in dem die bestimmte Anlage gruppiert ist.

6. Verfahren nach einem der vorhergehenden Ansprüche, wobei die empfangenen Schwingungsspektrumsdaten für jede der Vielzahl der Anlagen über eine bestimmte Zeitspanne gemittelt werden.

7. Verfahren nach Anspruch 6, wobei die empfangenen Schwingungsspektrumsdaten mehrere Spektren für jede der Vielzahl von Anlagen umfassen.

8. Verfahren nach einem der vorhergehenden Ansprüche, das ferner das Bestimmen mindestens eines Fehlers in den Schwingungsspektrumsdaten umfasst, wobei das Bestimmen der Identifizierung des mindestens einen Fehlers in den Schwingungsspektrumsdaten durch Ausführen eines Algorithmus erreicht wird, der so formuliert ist, dass er den mindestens einen Fehler erkennt.

9. Verfahren nach einem der vorangehenden Ansprüche, das ferner das Extrahieren mindestens eines Merkmals aus den empfangenen Spektrumsdaten für die Vielzahl von Anlagen pro Anlage umfasst, um eine Dimensionalität der Spektrumsdaten zu reduzieren.

10. Verfahren nach Anspruch 9, wobei die Bestimmung der Cluster für die Vielzahl von Anlagen anhand der Spektrumsdaten mit reduzierter Dimensionalität durchgeführt wird.

11. Verfahren nach Anspruch 1, wobei die Windturbine mindestens eine Hochgeschwindigkeitswelle und eine Niedergeschwindigkeitswelle aufweist, und die Bestimmung der Cluster für die Vielzahl von Anlagen und die Bestimmung der Identifizierung mindestens eines Fehlers in den Schwingungsspektrumsdaten unabhängig für jede der mindestens einen Hochgeschwindigkeitswelle und der Niedergeschwindigkeitswelle ausgeführt wird.

12. System, umfassend:

einen Speicher, zum Speichern prozessorausführbarer Anweisungen; und
einen oder mehrere Prozessoren, die die prozessorausführbaren Anweisungen ausführen, um:

Schwingungsspektrumsdaten von einer Vielzahl verschiedener Anlagen (805) zu erhalten;
basierend auf einer Form der Schwingungsspektrumsdaten für jedes der Vielzahl von Anlagen, Cluster für die Vielzahl von Anlagen zu bestimmen, wobei die Anlagen in einem gleichen Cluster gruppiert werden, die Schwingungsspektrumsdaten mit einer ähnlichen Spektrumsform aufweisen (810); eine Vielzahl von Fehlerklassifizierungen (815) für jeden der Cluster zu bestimmen, basierend auf einer Anwendung von aus dem Bereich abgeleiteten Mustererkennungsregeln für die Schwingungsspektrumsdaten;

eine Ausgabe zu erzeugen, die eine Zuordnung jeder der Vielzahl von Anlagen mit der Fehlerklassifizierung des Clusters aufweist, in dem die bestimmte Anlage gruppiert ist (820); und

eine Aufnahme der Ausgabe in einem Datenspeicher zu speichern;

und wobei es sich bei der Vielzahl der Anlagen jeweils um eine Windkraftanlage handelt;

und wobei die Bestimmung der Cluster für die Vielzahl von Anlagen durch Ausführen eines Algorithmus erreicht wird, der formuliert ist, um Schwingungsspektrumsdaten mit einer ähnlichen Spektrumsform zu identifizieren;

und wobei der Algorithmus einer der folgenden ist: ein hierarchischer Clustering-Algorithmus, ein k-means-Algorithmus, ein Nearest-Neighbour-Algorithmus und mindestens ein Algorithmus, der auf einer Kombination von Cluster-Verfahren basiert.

**Revendications**

1. Procédé mis en œuvre par ordinateur, le procédé comprenant :

la réception de données de spectre de vibration provenant d'une pluralité d'actifs différents (805) ;
la détermination, en fonction d'une forme des données de spectre de vibration pour chacun de la pluralité d'actifs, de regroupements pour la pluralité d'actifs, des actifs étant groupés dans un même regroupement ayant des données de spectre de vibration d'une forme spectrale similaire (810) ;
la détermination pour chacun des regroupements, en fonction d'une application de règles de reconnaissance de motif dérivé de domaine pour les données de spectre de vibration, de l'une d'une pluralité de classifications de défauts (815) ;
la génération d'une sortie incluant une association de chacun de la pluralité d'actifs avec la classification de défauts du regroupement dans lequel l'actif particulier est groupé (820) ; et
la sauvegarde d'un enregistrement de la sortie vers un magasin de données ;
et dans lequel la pluralité d'actifs sont chacun une turbine éolienne ;
et dans lequel la détermination des regroupements pour la pluralité d'actifs est accomplie en exécutant un algorithme formulé pour identifier des données de spectre de vibration ayant une forme spectrale similaire ;
et dans lequel l'algorithme est l'un d'un algorithme de regroupement hiérarchique, un algorithme à k moyennes, un algorithme du plus proche voisin, et au moins un algorithme en fonction d'une combinaison de procédés de regroupement.

2. Procédé selon la revendication 1, dans lequel la pluralité de classifications de défauts inclut au moins l'un des attributs suivants : sain, un ou plusieurs types de défauts connus, et inconnu.

3. Procédé selon la revendication 2, dans lequel les un ou plusieurs types de défauts connus incluent au moins l'un d'un défaut de passage de bille sur la piste interne, un défaut de passage de bille sur la piste externe, un défaut de rotation de bille, un défaut de palier planétaire, et un défaut de couronne.

4. Procédé selon l'une quelconque des revendications précédentes, dans lequel les données de spectre de vibration sont reçues provenant de deux étages différents pour au moins l'un de la pluralité d'actifs différents.

5. Procédé selon la revendication 4, comprenant en outre, pour chacun des deux étages différents de l'au moins un de la pluralité d'actifs différents :

la détermination, en fonction d'une forme des données de spectre de vibration, de regroupements pour la pluralité d'actifs ;
la détermination pour chacun des regroupements, en fonction d'une application de règles de reconnaissance de motif dérivé de domaine pour les données de spectre de vibration, de l'une d'une pluralité de classifications de défauts ; et
la génération d'une sortie incluant une association de chacun de la pluralité d'actifs avec la classification de défauts du regroupement dans lequel l'actif particulier est groupé.

6. Procédé selon l'une quelconque des revendications précédentes, dans lequel les données de spectre de vibration reçues sont, pour chacun de la pluralité d'actifs, moyennées sur un certain laps de temps.

**7.** Procédé selon la revendication 6, dans lequel les données de spectre de vibration reçues comprennent de multiples spectres pour chacun de la pluralité d'actifs.

**8.** Procédé selon l'une quelconque des revendications précédentes, comprenant en outre la détermination d'au moins un défaut dans les données de spectre de vibration dans lequel la détermination de l'identification de l'au moins un défaut dans les données de spectre de vibration est accomplie en exécutant un algorithme formulé pour détecter l'au moins un défaut.

**9.** Procédé selon l'une quelconque des revendications précédentes, comprenant en outre l'extraction, sur une base par actif, d'au moins une caractéristique parmi les données de spectre reçues pour la pluralité d'actifs pour réduire une dimensionnalité des données de spectre.

**10.** Procédé selon la revendication 9, dans lequel la détermination des regroupements pour la pluralité d'actifs est effectuée sur les données de spectre de dimensionnalité réduite.

**11.** Procédé selon la revendication 1, dans lequel la turbine éolienne inclut au moins l'un d'un arbre à grande vitesse et d'un arbre à faible vitesse et la détermination des regroupements pour la pluralité d'actifs et la détermination de l'identification d'au moins un défaut dans les données de spectre de vibration est exécutée indépendamment pour chacun de l'au moins un arbre à grande vitesse et de l'arbre à faible vitesse.

**12.** Système, comprenant

une mémoire stockant des instructions exécutables par processeur ; et
un ou plusieurs processeurs pour exécuter les instructions exécutables par processeur pour :

recevoir des données de spectre de vibration provenant d'une pluralité d'actifs différents (805) ;
déterminer, en fonction d'une forme des données de spectre de vibration pour chacun de la pluralité d'actifs, des regroupements pour la pluralité d'actifs, des actifs étant groupés dans un même regroupement ayant des données de spectre de vibration d'une forme spectrale similaire (810) ;
déterminer pour chacun des regroupements, en fonction d'une application de règles de reconnaissance de motif dérivé de domaine pour les données de spectre de vibration, l'une d'une pluralité de classifications de défauts (815) ;
générer une sortie incluant une association de chacun de la pluralité d'actifs avec la classification de défauts du regroupement dans lequel l'actif particulier est groupé (820) ; et
sauvegarder un enregistrement de la sortie vers un magasin de données ;
et dans lequel la pluralité d'actifs sont chacun une turbine éolienne ;
et dans lequel la détermination des regroupements pour la pluralité d'actifs est accomplie en exécutant un algorithme formulé pour identifier des données de spectre de vibration ayant une forme spectrale similaire ;
et dans lequel l'algorithme est l'un d'un algorithme de regroupement hiérarchique, un algorithme à k moyennes, un algorithme du plus proche voisin, et au moins un algorithme en fonction d'une combinaison de procédés de regroupement.

FIG. 1

200

FIG. 2

300

FIG. 3

400

FIG. 4

Stage 1 Spectrum Plot for Turbine

505   510

## FIG. 5A

Stage 1 Spectrum Plot for Turbine

515   520

## FIG. 5B

600

Stage 1 Spectrum Plot for Turbine

## FIG. 6

700

RECEIVE VIBRATION SPECTRUM DATA FROM ASSETS

705

PATTERN RECOGNITION
MODULE

710

ROOT CAUSE
DETERMINATION
MODULE

715

GENERATE OUTPUT OF FAULT CLASSIFICATION PER ASSET

720

*FIG. 7*

800

RECEIVE VIBRATION SPECTRUM DATA FROM ASSETS

805

CLUSTER ASSETS SHARING A SIMILAR SPECTERAL
SHAPE (i.e., PATTERN)

810

DETERMINE IDENTITY OF FAULT(S) IN CLUSTERS

815

GENERATE OUPUT OF FAULT CLASSIFICATION PER ASSET

820

*FIG. 8*

900

905

Receive Input Vibration Signal

910

Pre-Process Signal (e.g., Correct Slope and Normalize Signal)

915

Generate Initial Clusters

920

Merge Clusters

925

Identify, Based on Centroids of Merged Clusters, Whether The Signal is Faulty

930

For Each Cluster, Determine Distance Of Each Turbine In The Cluster From The Centroid

935

Is Turbine Far Away From Mean?

940

Yes → Turbine Classification Determined By A Rule Engine

No

945

Turbine Classified Same As The Centroid

*FIG. 9*

1000

Receive Input Vibration Signal — 1005

Compute Signal RMS and Standard Deviation (σ) — 1010

$$NormSpectra = \frac{Signal - RMS}{\sigma}$$ — 1015

1030

Run A Linear Regression Model To Compute The Slope Of The Signal. Subtract Values Of Linear Regression Output From *NormSpectra* — 1020

Compute RMS Energy Of The Normalised Signal. Set All values less than the RMS Value to 0 [*finalSpectra*]. — 1025

*FIG. 10*

1100

1105

Recive finalSpectra, The Feature Vector For Clustering

1110

Run Hierarchical Clustering For All Assets

1115

Compute And Normalize The Centroids For All Clusters

1120

For All Assets, Compute:
- Mean Distance Between All The Centroids
- Standard Deviation Of The Distances Between Centroids

1125

Choose Cluster n As The Reference Cluster

1130

Is Centroid Of Cluster n  < 1σ Away From Centroid Of Cluster n+1

1135

Yes

Merge Clusters. Update Cluster To Be Checked And Compute New Cluster Centroid

No

1140

Update Cluster To Be Checked

**FIG. 11**

**FIG. 12**

FIG. 13

EP 3 788 328 B1

1400

1405 — Input normalized signal

1410 — Identify the indices where the peaks have non-zero values [nonZeroList]

1415 — In nonZeroList, identify groups of peaks which are less than 4 indices apart from each other [subList]

1420 — In subList, identify locations where the slope of the signal changes [inflexion point]. Only keep those inflexion points where the change in slope is <0.2. [Identifying the triangles which characterise BS faults]

1425 — Compute number of triangles present in the signal [nTriangles]

1435 — Input Vibration Signal

1440 — If the location of the tallest peak in the signal is >10 and < 100, and the first three multiples of the tallest peak are non-zero, set BSFlag to 1 else BSFlag is 0

1430 — If BSFlag=1 and nTriangles >=5

No → 1450 Healthy

Yes → 1445 Ball Spin Fault

FIG. 14

1505 — Compute amplitude ratio

$$Ratio = \frac{Amplitude\ at\ a\ given\ frequency}{RMS\ of\ the\ spectrum}$$

1510 — Spectrum amplitude having Ratio > Threshold are classified as high amplitude peaks

1515 — Group high amplitude peaks which are close to each other

1520 — Filter peak groups based on the number of peaks in the group. Any group having less than 4 peaks is filtered out.

1525 — 

$$Group\ Ratio = \frac{RMS\ of\ Amplitude\ of\ the\ frequencies\ in\ the\ group}{RMS\ of\ the\ spectrum}$$

1530 — Filter out low energy groups i.e. groups with Group Ratio < 1.

1535 — Compute statistics for the asset i.e. no. of groups in the spectrum, average energy of each group, average GroupRatio

1540 — Group turbines based on common gear mesh frequencies and harmonic signatures

1545 — For each gearbox group compute:
- Number of haystack patterns in each turbine spectrum in the group (nGroup)
- Average number of haystack patterns across the group (AvgGroup)
- Number of turbines in each group (size)

1550 — IF size > 10

1552 (NO) — Compute mean(AvgGroup) and mean(sigma) across the larger groups

1555 — All turbines in the groups having:
- nGroups < mean(AvgGroup) → Healthy Turbine
- nGroups > mean(sigma) → Faulty Turbine

1560 (YES) — Compute the standard deviation of nGroups in the gearbox group (sigma)

1565 — Classify turbines in the group based on the value of nGroups. For turbine having:
- nGroups < 1 Sigma → Healthy Turbine
- 1 Sigma < nGroups < 2 Sigma → Potentially Faulty Turbine
- nGroups > 2 Sigma → Faulty Turbine

**FIG. 15**

| Input Device(s) 1610 | Communication Device 1615 | Output Device(s) 1620 |

Processor 1605

Memory 1625

1630

Fault Rule Engine 1635

Data 1640

1600

*FIG. 16*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110060564 A